# EUROPEAN PATENT APPLICATION

(11) **EP 4 203 125 A1**
(43) Date of publication of application: **28.06.2023**
(21) Application number: 22214470.1
(22) Date of filing: 19.12.2022
(51) Int. Cl.: H01M 10/04, H01M 50/531, H01M 50/538

(54) **SECONDARY BATTERY**

(30) Priority: 24.12.2021 JP 2021210516
(71) Applicant: Prime Planet Energy & Solutions, Inc., Chuo-ku Tokyo 103-0022 (JP)
(72) Inventor: WAKIMOTO, Ryoichi, Tokyo, 103-0022 (JP)
(74) Representative: Kuhnen & Wacker Patent- und Rechtsanwaltsbüro PartG mbB

(57) **Abstract**

Provided is a technique increasing the capacity of secondary batteries. According to the technique disclosed herein, there is provided a secondary battery (1) having a flat wound electrode body (20, 220, 320) in which a first electrode (22) and a second electrode (24) different from the first electrode (22) are laminated and wound with a separator (26) interposed therebetween, and a first current collecting member (50). The wound electrode body (20, 220, 320) has a plurality of first electrode tabs (22t). Ten or more first electrode tabs (22t) are provided and stacked. In a thickness direction (T) of the wound electrode body (20, 220, 320), a ratio (N_{1A}/N_{1B}) of the number N_{1A} of stacked layers of the first electrode tabs (22t) and the number N_{1B} of stacked layers of the first electrode (22) satisfies 0.3 to 0.7. The plurality of first electrode tabs (22t) are bent and connected to the first electrode current collecting member (50).

## Description

### BACKGROUND OF THE DISCLOSURE

### 1. Technical Field

The present disclosure relates to a secondary battery.

### 2. Background

Secondary batteries such as lithium-ion secondary batteries are used, for example, as high-output power sources for driving vehicles. This kind of secondary battery includes, as a power generation element, a so-called wound electrode body in which, for example, a first electrode and a second electrode are laminated and wound with a separator interposed therebetween.

A wound electrode body disclosed in Japanese Patent No. 5174840 has a plurality of electrode tabs at one end in the winding axis direction. The plurality of electrode tabs are stacked in the thickness direction of the wound electrode body and connected to a collector member (electrode terminal) in a bent state. Japanese Patent No. 5174840 proposes forming the electrode tabs on one side along the radial direction with respect to the winding axis of the wound electrode body.

### SUMMARY OF THE INVENTION

With the spread of secondary batteries in recent years, the demand for raising the capacity of secondary batteries has been increasing.

According to the technique disclosed herein, there is provided a secondary battery that has a flat wound electrode body in which a first electrode and a second electrode different from the first electrode are laminated and wound with a separator interposed therebetween. This secondary battery has a first current collecting member connected to the first electrode. The wound electrode body has a plurality of first electrode tabs connected to the first electrode at a first end portion in a winding axis direction. Ten or more first electrode tabs are provided. The plurality of first electrode tabs are stacked. In a thickness direction of the wound electrode body, a ratio (N_{1A}/N_{1B}) of the number N_{1A} of stacked layers of the first electrode tabs and the number N_{1B} of stacked layers of the first electrode satisfies 0.3 to 0.7. The plurality of first electrode tabs are bent and connected to the first electrode current collecting member.

In the secondary battery having such a configuration, the number of stacked layers of the first electrode tabs in the wound electrode body, and the ratio of the number of stacked layers of the first electrode tabs to the number of stacked layers of the first electrode are set within the above ranges. This can reduce the size of the current collecting portion in the vicinity of the first electrode tabs while maintaining a sufficient output of the secondary battery. Therefore, the size of main body of the electrode body can be increased, and the capacity of the secondary battery can be increased.

In a preferred embodiment of the secondary battery disclosed herein, a plane, passing through the winding axis of the wound electrode body, and perpendicular to the thickness direction of the wound electrode body, is defined as a first plane. The first plane and the first electrode current collecting member intersect. With such a configuration, the effects of the technique disclosed herein can be better realized.

In another preferred embodiment of the secondary battery disclosed herein, the secondary battery includes a battery case that accommodates the wound electrode body therein. The battery case has an exterior body having a bottom portion, an opening, a pair of first side walls, and a pair of second side walls, and a sealing plate that seals the opening. The effects of the technique disclosed herein can be more preferably realized in a so-called angular secondary battery.

In another preferred embodiment of the secondary battery disclosed herein, the wound electrode body has a first flat outer surface and a second flat outer surface at both ends in the thickness direction of the wound electrode body. The wound electrode body has a plurality of second electrode tabs connected to the second electrode at the first end portion or at a second end portion different from the first end portion in the winding axis direction, and the plurality of second electrode tabs are stacked. A plane, passing through the winding axis of the wound electrode body, and perpendicular to the thickness direction of the wound electrode body, is defined as a first plane. In the wound electrode body, a region on the first flat outer surface side with respect to the first plane is defined as a first region, and a region on the second flat outer surface side with respect to the first plane is defined as a second region. In the first region, a ratio A of the number of stacked layers of the first electrode tabs to the number of stacked layers of the first electrode is 0.8 or more, and a ratio B of the number of stacked layers of the second electrode tabs to the number of stacked layers of the second electrode is 0.2 or less. In the second region, a ratio C of the number of stacked layers of the first electrode tabs to the number of stacked layers of the first electrode is 0.2 or less, and a ratio D of the number of stacked layers of the second electrode tabs to the number of stacked layers of the second electrode is 0.8 or more. According to such a configuration, in addition to the above effects, it is possible to suppress the uneven distribution of current density in the wound electrode body. Furthermore, it is preferable that the secondary battery has following configurations. The plurality of first electrode tabs are bundled on the first flat outer surface side, and the plurality of second electrode tabs are bundled on the first flat outer surface side. In addition, the plurality of first electrode tabs are bent such that a distal end side of a bundled portion faces the second flat outer surface, and the plurality of second electrode tabs are bent such that a distal end side of a bundled portion faces the second flat outer surface.

In another preferred embodiment of the secondary battery disclosed herein, the wound electrode body has a first flat outer surface and a second flat outer surface at both ends in the thickness direction of the wound electrode body. The wound electrode body has a plurality of second electrode tabs connected to the second electrode at the first end portion or at a second end portion different from the first end portion in the winding axis direction, and the plurality of second electrode tabs are stacked. A plane, passing through the winding axis of the wound electrode body, and perpendicular to the thickness direction of the wound electrode body, is defined as a first plane. In the wound electrode body, a region on the first flat outer surface side with respect to the first plane is defined as a first region, and a region on the second flat outer surface side with respect to the first plane is defined as a second region. In the first region, a ratio A of the number of stacked layers of the first electrode tabs to the number of stacked layers of the first electrode is 0.8 or more, and a ratio B of the number of stacked layers of the second electrode tabs to the number of stacked layers of the second electrode is 0.8 or more. In the second region, a ratio C of the number of stacked layers of the first electrode tabs to the number of stacked layers of the first electrode is 0.2 or less, and a ratio D of the number of stacked layers of the second electrode tabs to the number of stacked layers of the second electrode is 0.8 or more. According to such a configuration, in addition to the effect of increasing the capacity of the secondary battery, it is possible to suppress the uneven distribution of current density in the wound electrode body. Furthermore, it is preferable that the secondary battery has following configurations. The plurality of first electrode tabs are bundled on the first flat outer surface side, and the plurality of second electrode tabs are bundled on the first flat outer surface side. In addition, the plurality of first electrode tabs are bent such that a distal end side of a bundled portion faces the second flat outer surface, and the plurality of second electrode tabs are bent such that a distal end side of a bundled portion faces the second flat outer surface.

### BRIEF DESCRIPTION OF THE DRAWINGS

FIG. 1 is a perspective view schematically showing a secondary battery according to the first embodiment;
FIG. 2 is a cross-sectional view taken along line II-II in FIG. 1;
FIG. 3 is a perspective view showing a wound electrode body attached to a sealing plate;
FIG. 4 is a perspective view showing a wound electrode body to which a second current collecting portion is attached;
FIG. 5 is a schematic drawing explaining the configuration of the wound electrode body;
FIG. 6 is a cross-sectional view of the wound electrode body in the first embodiment;
FIG. 7 is a plan view explaining the arrangement of electrode tabs in the first embodiment;
FIG. 8 is a schematic drawing explaining the connection between the electrode tabs and the electrode current collecting member;
FIG. 9 is a cross-sectional view of a wound electrode body in the second embodiment;
FIG. 10 is a plan view explaining the arrangement of electrode tabs in the second embodiment; and
FIG. 11 is a perspective view of the wound electrode body in the third embodiment.

### DETAILED DESCRIPTION OF THE PREFERRED EMBODIMENTS

Several preferred embodiments of the technique disclosed herein will be described below with reference to the drawings. The embodiments described herein are of course not intended to specifically limit the present invention. Each drawing is schematically drawn and does not necessarily reflect the real item. Further, members and portions that perform the same functions are given, as appropriate, the same reference numerals, and overlapping descriptions are omitted. Matters other than those specifically mentioned in this description that are necessary for implementing the technique disclosed herein (for example, general configurations and manufacturing processes of secondary batteries that do not characterize the technique disclosed herein) can be understood as design matters for a person skilled in the art that are based on the prior art in the pertinent field. The technique disclosed herein can be implemented based on the contents disclosed in this description and common technical knowledge in the pertinent field. In addition, the notation of "A to B" indicating a numerical range in this description means "A or more and B or less", and also includes the case where a numerical value is higher than A and lower than B.

As used herein, the term "secondary battery" is a general term that refers to electricity storage devices that can be repeatedly charged and discharged. It is a concept that is inclusive of so-called storage batteries (chemical batteries) such as lithium-ion secondary batteries and nickel-hydrogen batteries, and capacitors such as electric double layer capacitors.

In the drawings referred to in this description, the symbol X indicates the "depth direction", the symbol Y indicates the "width direction", and the symbol Z indicates the "height direction". Further, F in the depth direction X indicates "front" and Rr indicates "rear". L in the width direction Y indicates "left" and R indicates "right". U in the height direction Z indicates "up", and D indicates "down". However, these are merely directions for convenience of explanation, and do not limit the installation form of a secondary battery and the installation form of a battery pack.

### First Embodiment

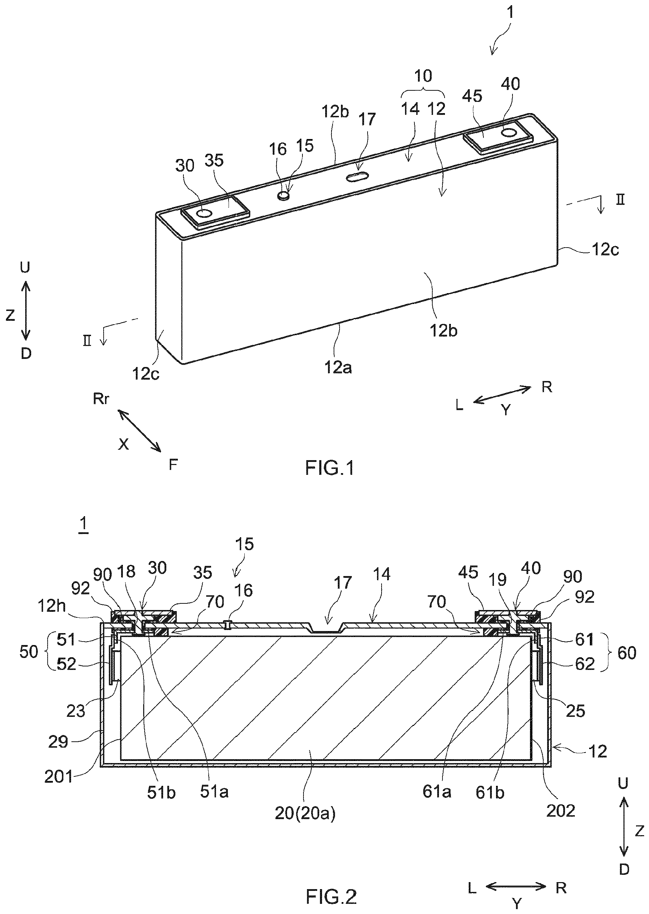

FIG. 1 is a perspective view schematically showing the secondary battery according to the first embodiment. FIG. 2 is a sectional view taken along line II-II in FIG. 1. As shown in FIGS. 1 and 2, the secondary battery 1 includes a battery case 10, a wound electrode body 20, a positive electrode terminal 30, a negative electrode terminal 40, external conductive members 35 and 45, a positive electrode current collecting member 50, a negative electrode current collecting member 60, an insulator 70, a gasket 90, and an external insulating member 92. The positive electrode current collecting member 50 is an example of the "first electrode current collecting member". The negative electrode current collecting member 60 is an example of the "second electrode current collecting member". In this embodiment, the secondary battery 1 is a lithium-ion secondary battery. Although not shown, the secondary battery 1 includes, for example, an electrolytic solution. As the electrolytic solution, an electrolytic solution used for this kind of lithium-ion secondary battery can be used without particular limitation. Since the composition of such an electrolytic solution does not characterize the technique disclosed herein, detailed description thereof is omitted herein.

In this embodiment, the battery case 10 is a housing that accommodates the wound electrode body 20 and the electrolytic solution. The battery case 10 herein has a flat bottomed rectangular parallelepiped (angular) outer shape. The material of the battery case 10 may be the same as that conventionally used and is not particularly limited. The battery case 10 is preferably made of a metal, and more preferably of, for example, aluminum, an aluminum alloy, iron, an iron alloy, or the like.

In this embodiment, the battery case 10 includes an exterior body 12 and a sealing plate (lid) 14. As shown in FIG. 1, the exterior body 12 includes a planar rectangular bottom portion 12a, a pair of first side walls 12b extending in the height direction Z from a pair of opposing sides of the bottom portion 12a and facing each other, and a pair of second side walls 12c extending in the height direction Z from a pair of opposing sides of the bottom portion 12a and facing each other. In this embodiment, the first side walls 12b are long side walls extending from a pair of opposing long sides of the bottom portion 12a. The second side walls 12c are short side walls extending from a pair of opposing short sides of the bottom portion 12a. In this embodiment, the area of the second side wall 12c is smaller than the area of the first side wall 12b. A portion facing the bottom portion 12a and surrounded by the pair of first side walls 12b and the pair of second side walls 12c is an opening 12h. The sealing plate 14 is a member that seals the opening 12h of the exterior body 12. The sealing plate 14 faces the bottom portion 12a of the exterior body 12. The sealing plate 14 has a substantially rectangular shape in a plan view. The battery case 10 is integrated by joining a sealing plate 14 to the periphery of the opening of the exterior body 12. The joining means is, for example, welding such as laser welding. The battery case 10 is hermetically sealed.

A liquid injection hole 15 and a gas discharge valve 17 are provided in the sealing plate 14. The liquid injection hole 15 is for injecting an electrolytic solution after the sealing plate 14 is attached to the exterior body 12. The liquid injection hole 15 is sealed with a sealing member 16. The gas discharge valve 17 is a thin-walled portion configured to break when the pressure inside the battery case 10 reaches or exceeds a predetermined value to discharge the gas inside the battery case 10 to the outside.

In this embodiment, a positive electrode terminal 30 and a negative electrode terminal 40 are attached to the sealing plate 14. In this embodiment, the positive electrode terminal 30 is arranged at one end (the left end in FIGS. 1 and 2) of the sealing plate 14 in the long side direction Y. In this embodiment, the negative electrode terminal 40 is arranged at the other end (the right end in FIGS. 1 and 2) of the sealing plate 14 in the long side direction Y.

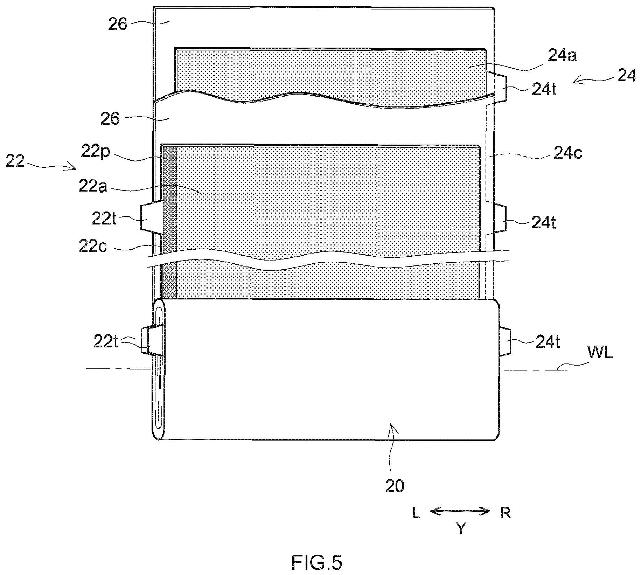

As shown in FIG. 2, the positive electrode terminal 30 is electrically connected to the positive electrode 22 (see FIG. 5) of the wound electrode body 20 by a positive electrode current collecting member 50 inside the exterior body 12. The positive electrode terminal 30 is, for example, inserted through a terminal drawing hole 18 and drawn out from the inside of the sealing plate 14 to the outside. The positive electrode terminal 30 is insulated from the sealing plate 14 by an insulator 70 and a gasket 90. The positive electrode terminal 30 is preferably made of metal, and more preferably made of, for example, aluminum or an aluminum alloy. An external conductive member 35 is fixed on the positive electrode terminal 30. The positive electrode terminal 30 is joined to the external conductive member 35.

As shown in FIG. 2, the negative electrode terminal 40 is electrically connected to the negative electrode 24 (see FIG. 5) of the wound electrode body 20 by a negative electrode current collecting member 60 inside the exterior body 12. The negative electrode terminal 40 is, for example, inserted through a terminal drawing hole 19 and drawn out from the inside of the sealing plate 14 to the outside. The negative electrode terminal 40 is insulated from the sealing plate 14 by the insulator 70 and the gasket 90. The negative electrode terminal 40 is preferably made of metal, and more preferably made of, for example, copper or a copper alloy. An external conductive member 45 is fixed on the negative electrode terminal 40. The negative electrode terminal 40 is joined to the external conductive member 45.

The positive electrode current collecting member 50 is, for example, a member that electrically connects the positive electrode 22 and the positive electrode terminal 30 inside the exterior body 12. As shown in FIG. 2, the positive electrode current collecting member 50 includes a first current collecting portion 51 and a second current collecting portion 52. The first current collecting portion 51 is formed, for example, in an L-shaped cross section. The first current collecting portion 51 has, for example, a base 51a and a lead 51b. As shown in FIG. 2, the base 51a is arranged along the inner surface of the sealing plate 14. The lead 51b extends, for example, from one end in the width direction Y of the base 51a toward the bottom portion 12a. For example, the second current collecting portion 52 is connected to the lead 51b.

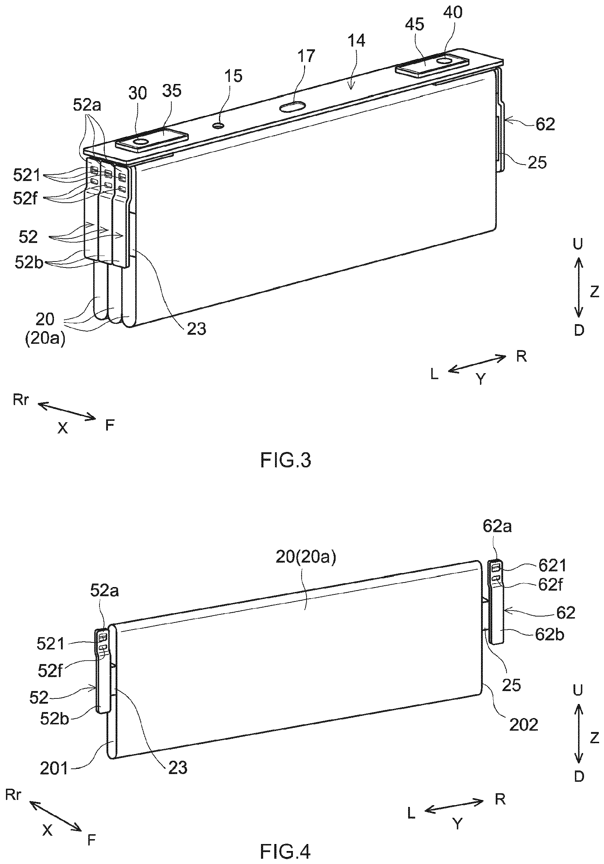

FIG. 3 is a perspective view showing the wound electrode body attached to the sealing plate. FIG. 4 is a perspective view showing the wound electrode body to which the second current collecting portion is attached. As shown in FIGS. 2 to 4, the second current collecting portion 52 extends toward the bottom portion 12a of the exterior body 12. In this embodiment, the second current collecting portion 52 has a first connection piece 52a and a second connection piece 52b. The first connection piece 52a is, for example, a portion electrically connected to the first current collecting portion 51. In this embodiment, the first connection piece 52a is connected to the first current collecting portion 51 by a connection portion 521. The connection portion 521 is, for example, a thin portion. The first connection piece 52a extends in, for example, the vertical direction Z. In this embodiment, the first connection piece 52a is arranged substantially perpendicular to the winding axis WL of each wound electrode body 20. Although not particularly limited, a fuse portion 52f may be formed in the first connection piece 52a. The fuse portion 52f is configured to blow when a current of 1000 A or more (for example, a short-circuit current) flows through the secondary battery 1.

The second connection piece 52b is, for example, a portion that is joined to a positive electrode tab group 23. In this embodiment, the second connection piece 52b extends along the vertical direction Z. The second connection piece 52b is arranged substantially perpendicular to the winding axis WL of each electrode body 20. The surface of the second connection piece 52b that is connected to a plurality of positive electrode tabs 22t is arranged substantially parallel to the second side wall 12c of the exterior body 12. From the viewpoint of reducing the battery resistance of the secondary battery 1 by ensuring a sufficient width of the second connection piece 52b, the surface of the second connection piece 52b connected to the plurality of positive electrode tabs 22t is arranged so as to face a first end portion 201 of the wound electrode body 20.

The negative electrode current collecting member 60 is a member that electrically connects the negative electrode 24 and the negative electrode terminal 40 inside the exterior body 12. As shown in FIGS. 2 to 4, the negative electrode current collecting member 60 includes a first current collecting portion 61 and a second current collecting portion 62. The first current collecting portion 61 has a base 61a and a lead 61b. The second current collecting portion 62 has a first connection piece 62a and a second connection piece 62b. Since the configuration of the negative electrode current collecting member 60 is the same as the configuration of the positive electrode current collecting member 50 described above, detailed description thereof will be omitted herein. Regarding the negative electrode current collecting member 60, reference numeral "621" in FIG. 4 denotes a connection portion, and reference numeral "62f" denotes a fuse portion.

As shown in FIG. 3, the secondary battery 1 has three wound electrode bodies 20. As shown in FIGS. 3 and 4, the second current collecting portions 52 of the positive electrode current collecting members 50 are arranged on one side in the long side direction Y (left side in FIGS. 3 and 4) and the second current collecting portions 62 of the negative electrode current collecting members 60 are arranged on the other side in the long side direction Y (on the right side in FIGS. 3 and 4) and connected in parallel. As shown in FIG. 2, one or a plurality of wound electrode bodies 20 is placed inside the exterior body 12 while being covered with an electrode body holder 29 made of a resin sheet such as polypropylene (PP). The number of wound electrode bodies 20 accommodated in the secondary battery 1 is not particularly limited, and may be, for example, one, two, or four or more.

One example of means for increasing the capacity of a secondary battery is to increase the size of the electrode body. The inventor focused attention on the volume required to accommodate members other than the electrode body (for example, other than a main body of the electrode body) in the battery case. According to studies conducted by the present inventor, the volume occupied by conventional electrode tabs can be reduced to increase the size of the wound electrode body, which in turn can increase the capacity of the secondary battery by setting the balance between the number of stacked layers of electrode in the thickness direction of the wound electrode body and the number of stacked layers of electrode tabs of the same polarity within a suitable range. Hereinbelow, the technique disclosed herein will be described in more detail with reference to the case where the "first electrode" is the positive electrode 22 and the "second electrode" is the negative electrode 24.

FIG. 5 is a schematic drawing explaining the configuration of the wound electrode body. As shown in FIG. 5, the wound electrode body 20 includes the positive electrode 22, the negative electrode 24, and a separator 26 disposed between the positive electrode 22 and the negative electrode 24. As shown in FIG. 5, the wound electrode body 20 is an electrode body in which the positive electrode 22 and the negative electrode 24 are laminated and wound with the separator 26 interposed therebetween.

As shown in FIGS. 2 to 4, the wound electrode body 20 includes a main body 20a, the positive electrode tab group 23, and a negative electrode tab group 25. The main body 20a is a portion in which the positive electrode 22, the negative electrode 24, and the separator 26 are laminated, and has, for example, a flat shape.

The width of the main body 20a is, for example, 20 cm or more. The width of the main body 20a may be, for example, 25 cm or more, or may be 30 cm or more. The width of the main body 20a may be, for example, 50 cm or less, or may be 40 cm or less. In this description, the "width of the main body 20a" refers to, for example, the length of the main body 20a in the lateral direction of the positive electrode 22 and the negative electrode 24 (the width direction Y in FIG. 5).

As shown in FIGS. 1, 2, and 5, the wound electrode body 20 is arranged inside the exterior body 12 in an orientation such that the winding axis WL is parallel to the width direction Y. In this embodiment, the wound electrode body 20 is disposed inside the exterior body 12 in an orientation such that the winding axis WL is parallel to the bottom portion 12a and perpendicular to the second side wall 12c. Both end portions of the wound electrode body 20 in the direction along the winding axis WL (hereinafter also referred to as "winding axis direction") face the second side walls 12c of the exterior body 12. In this description, the end portion of the wound electrode body 20 (for example, the main body 20a) facing the second side wall 12c on the side close to the positive electrode current collecting member 50 (the left side in the width direction Y in FIGS. 2 and 4) is referred to as the "first end portion 201". The end portion of the electrode body 20 (for example, the main body 20a) facing the second side wall 12c on the side close to the negative electrode current collecting member 60 (the right side in the width direction Y in FIGS. 2 and 4) is referred to as the "second end portion 202".

The separator 26 is a member that insulates a positive electrode active material layer 22a of the positive electrode 22 and a negative electrode active material layer 24a of the negative electrode 24. The separator 26 constitutes the outer surface of the wound electrode body 20. As the separator 26, for example, a resin porous sheet made of polyolefin resin such as polyethylene (PE), polypropylene (PP), and the like is used. As the separator 26, for example, a separator having a base material (the resin porous sheet described above) and an adhesive layer provided on the base material may be used.

The positive electrode 22 is, for example, a positive electrode plate having a long strip-shaped positive electrode current collecting foil 22c (for example, an aluminum foil) and the positive electrode active material layer 22a fixedly attached onto at least one surface of the positive electrode current collecting foil 22c. Although not particularly limited, one side edge portion in the width direction Y of the positive electrode 22 may be provided, as necessary, with a positive electrode protective layer 22p. Materials that have been used in this kind of secondary batteries (lithium-ion secondary battery in this embodiment) can be used without particular limitation for the materials constituting the positive electrode active material layer 22a and the positive electrode protective layer 22p, and since such materials do not characterize the technique disclosed herein, detailed descriptions thereof are omitted herein.

The plurality of positive electrode tabs 22t are provided at one end of the positive electrode current collecting foil 22c in the width direction Y (the left end in FIG. 5). The plurality of positive electrode tabs 22t each protrude toward one side in the width direction Y (left side in FIG. 5). The plurality of positive electrode tabs 22t are provided at intervals (intermittently) along the longitudinal direction of the positive electrode 22. The positive electrode tab 22t is a part of the positive electrode current collecting foil 22c and is a portion (current collecting foil exposed portion) of the positive electrode current collecting foil 22c, where the positive electrode active material layer 22a and the positive electrode protective layer 22p are not formed. In this embodiment, the plurality of positive electrode tabs 22t protrude in the width direction Y from the separator 26. For example, the plurality of positive electrode tabs 22t are stacked at one end (the left end in FIG. 5) in the width direction Y to constitute the positive electrode tab group 23 (see FIGS. 2 to 4). As shown in FIG. 2, the positive electrode current collecting member 50 is joined to the positive electrode tab group 23. As shown in FIGS. 1 to 3, in the positive electrode tab group 23 joined to the positive electrode current collecting member 50, the tips of the plurality of positive electrode tabs 22t constituting the positive electrode tab group 23 are bent so as to be arranged along the second side wall 12c. Although the positive electrode tabs 22t having substantially the same length and shape are illustrated in FIG. 5, the lengths and shapes of the respective positive electrode tabs 22t may be different from each other.

The negative electrode 24 is, for example, a negative electrode plate having a long strip-shaped negative electrode current collecting foil 24c (for example, a copper foil) and a negative electrode active material layer 24a fixedly attached onto at least one surface of the negative electrode current collecting foil 24c. Materials that have been used in this kind of secondary batteries (lithium-ion secondary battery in this embodiment) can be used without particular limitation for the material constituting the negative electrode active material layer 24a, and since such materials do not characterize the technique disclosed herein, detailed descriptions thereof are omitted herein.

The plurality of negative electrode tabs 24t are provided at one end (the right end in FIG. 5) of the negative electrode current collecting foil 24c in the width direction Y. The plurality of negative electrode tabs 24t protrude toward one side in the width direction Y (right side in FIG. 5). The plurality of negative electrode tabs 24t are provided at intervals (intermittently) along the longitudinal direction of the negative electrode 24. The negative electrode tab 24t is a part of the negative electrode current collecting foil 24c and is a portion (current collecting foil exposed portion) of the negative electrode current collecting foil 24c, where the negative electrode active material layer 24a is not formed. In this embodiment, the negative electrode tabs 24t protrude in the width direction Y from the separator 26. For example, the plurality of negative electrode tabs 24t are stacked at one end (the right end in FIG. 5) in the width direction Y to constitute the negative electrode tab group 25 (see FIGS. 2 to 4). As shown in FIG. 2, the negative electrode current collecting member 60 is joined to the negative electrode tab group 25. The negative electrode tab group 25 joined to the negative electrode current collecting member 60 is bent such that the tips of the plurality of negative electrode tabs 24t constituting the negative electrode tab group 25 are arranged along the second side wall 12c. Although the negative electrode tabs 24t having substantially the same length and shape are illustrated in FIG. 5, the lengths and shapes of the respective negative electrode tabs 24t may be different from each other.

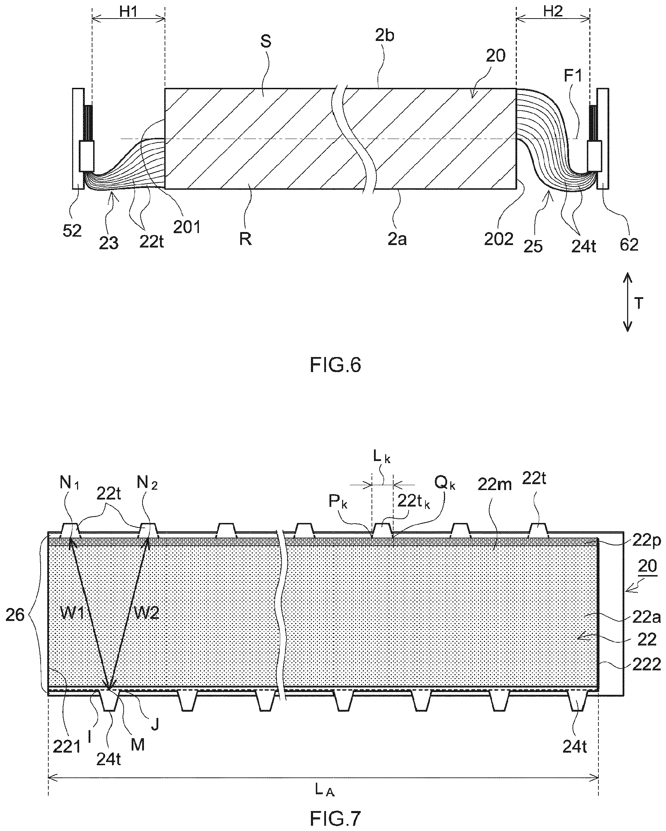

For example, in the wound electrode body 20 produced by superimposing and winding the positive electrode 22, the negative electrode 24, and the separator 26, the positive electrode tabs 22t and the negative electrode tabs 24t can be provided so as to realize the configuration described hereinbelow. FIG. 6 is a cross-sectional view of the wound electrode body in the first embodiment. FIG. 7 is a plan view for explaining the arrangement of electrode tabs in the first embodiment.

When the winding is performed, in this embodiment, in the thickness direction of the wound electrode body 20, the ratio (N_{1A}/N_{1B}) of the number N_{1A} of stacked layers of the positive electrode tabs 22t and the number N_{1B} of stacked layers of the positive electrode 22 satisfies 0.3 to 0.7. The ratio (N_{1A}/N_{1B}) is preferably 0.4 to 0.6. In this description, the "thickness direction of the wound electrode body 20" refers to, for example, the direction T in which the electrodes and the separator are stacked between the first flat outer surface 2a and the second flat outer surface 2b of the wound electrode body 20 that is shown in FIG. 6. Hereinafter, the same direction is also simply referred to as "thickness direction T". The number N_{1A} of stacked layers of the positive electrode tabs 22t can be defined, for example, by the number of overlapping positive electrode tabs 22t when viewed along the thickness direction T. The number N_{1B} of stacked layers of the positive electrode 22 can be defined, for example, by the number of layers of a positive electrode main body 22m present between the first flat outer surface 2a and the second flat outer surface 2b of the wound electrode body 20 in the thickness direction T (see FIG. 7). The positive electrode main body 22m is, for example, a long strip-shaped portion of the positive electrode 22 excluding the positive electrode tabs 22t.

Although not particularly limited, the number N_{1B} of stacked layers of the positive electrode 22 in the wound electrode body 20 can be set, as appropriate, for example, to 20 to 50 (preferably, 30 to 40). Meanwhile, for example, ten or more positive electrode tabs 22t are provided at the first end portion 201 (see FIG. 2). The upper limit of the number N_{1A} of stacked layers of the positive electrode tabs 22t can be set so that the ratio (N_{1A}/N_{1B}) satisfies the above range. For example, 20 or fewer positive electrode tabs 22t are provided.

In order to set the ratio (N_{1A}/N_{1B}) to satisfy the above range, for example, with respect to the positive electrode 22 provided with n (n is an integer that satisfies 10 ≤ n ≤ 20) positive electrode tabs 22t, it is also possible to change, as appropriate, the ratio of the total ΣLₙ (that is, L₁ + L₂ + ... + Lₙ) of the lengths Lₙ of the plurality of positive electrode tabs 22t in the longitudinal direction to the length L_{A} of the positive electrode 22 in the same direction. The length Lₙ indicates the base width of the positive electrode tab 22t in the longitudinal direction of the positive electrode 22. The "base of the positive electrode tab 22t" refers to, for example, a boundary portion between the positive electrode tab 22t and the positive electrode main body 22m. The "base width of the positive electrode tab 22t" refers to, for example, the width of the positive electrode tab 22t along the longitudinal direction of the positive electrode 22 at the boundary portion. As shown in FIG. 7, the base width Lₖ of the k-th (k is an integer that satisfies 1 ≤ k ≤ n) positive electrode tab 22tₖ from a first edge 221 toward a second edge 222 in the longitudinal direction of the positive electrode 22 can be defined, for example, by the shortest distance between one end point Pₖ and the other end point Qₖ of the base of the positive electrode tab 22tₖ.

In this embodiment, the ratio (ΣLₙ/L_{A}) of the total ΣLₙ and the length L_{A} is set to 0.1 or more. The ratio (ΣLₙ/L_{A}) is more preferably 0.2 or more and even more preferably 0.3 or more in order to more effectively increase the capacity of the secondary battery 1 while suppressing the deterioration of the input/output performance thereof. In consideration of improving the bendability of the positive electrode tabs 22t, the ratio (ΣLₙ/L_{A}) is, for example, preferably 0.8 or less, more preferably 0.7 or less, and even more preferably 0.6 or less.

As shown in FIG. 6, the wound electrode body 20 has, at both ends in the thickness direction T, the first flat outer surface 2a and the second flat outer surface 2b. The wound electrode body 20 has, for example, a first region R on the first flat outer surface 2a side and a second region S on the second flat outer surface 2b side. As shown in FIG. 6, the first region R is the region of the wound electrode body 20 on the first flat outer surface 2a side with respect to the first plane F1. Further, the second region S is a region of the wound electrode body 20 on the second flat outer surface 2b side with respect to the first plane F1. In the present description, the "first plane F1" refers to a plane passing through the winding axis WL of the wound electrode body 20 and perpendicular to the thickness direction T of the wound electrode body 20 (see FIGS. 5 and 6).

In this embodiment, in the first region R, the ratio A (N_{R1A}/N_{R1B}) of the number N_{R1A} of stacked layers of the positive electrode tabs 22t to the number N_{R1B} of stacked layers of the positive electrode 22 is 0.8 or more. The ratio A (N_{R1A}/N_{R1B}) is preferably 0.9 or more, and the closer it is to 1.0, the better. Further, in this embodiment, in the second region S, the ratio C (N_{S1A}/N_{S1B}) of the number N_{S1A} of stacked layers of the positive electrode tabs 22t to the number N_{S1B} of stacked layers of the positive electrode 22 is 0.2 or less. The ratio C (N_{S1A}/N_{S1B}) is preferably 0.1 or less, and the closer it is to 0, the better.

Regarding the negative electrode 24, in this embodiment, the ratio between the number of stacked layers of the negative electrode tabs 24t and the number of stacked layers of the negative electrode 24 in each region is set as follows. Further, for example, from the viewpoint of connection to the negative electrode current collecting member 60 described hereinbelow, it is preferable that the length of the negative electrode tab 24t in the lateral direction of the negative electrode 24 be larger than the length of the positive electrode tab 22t in the same direction. Other than that, the negative electrode side has the same configuration as the positive electrode side, and therefore, the redundant description is omitted.

In this embodiment, in the first region R, the ratio B (N_{R2A}/N_{R2B}) of the number N_{R2A} of stacked layers of the negative electrode tabs 24t to the number N_{R2B} of stacked layers of the negative electrode 24 is 0.2 or less. The ratio B (N_{R2A}/N_{R2B}) is preferably 0.1 or less, and the closer it is to 0, the better. Further, in this embodiment, in the second region S, the ratio D (N_{S2A}/N_{S2B}) of the number N_{S2A} of stacked layers of the negative electrode tabs 24t to the number N_{S2B} of stacked layers of the negative electrode 24 is 0.8 or more. The ratio D (N_{S2A}/N_{S2B}) is preferably 0.9 or more, and the closer it is to 1.0, the better.

As shown in FIG. 7, when the positive electrode 22 and the negative electrode 24 are superimposed with the separator 26 interposed therebetween, the plurality of negative electrode tabs 24t do not overlap the positive electrode tabs 22t in the lateral direction of the electrodes. When the positive electrode 22, the negative electrode 24, and the separator 26 are superimposed and wound with the electrode tabs arranged in this way, the configuration of the wound electrode body 20 shown in FIG. 6 can be realized.

In this embodiment, the positional relationship between the negative electrode tab 24t and the two positive electrode tabs 22t adjacent to the negative electrode tab 24t is preferably set as follows. As shown in FIG. 7, where the distance from one negative electrode tab 24t to the nearest positive electrode tab 22t of the two positive electrode tabs 22t adjacent to the negative electrode tab 24t is denoted by W1, and the distance to the other positive electrode tab 22t is denoted by W2, the ratio (W2/W1) of the distance W2 to the distance W1 is, for example, greater than 1.0 and less than or equal to 1.5. From the viewpoint of better realizing the effects of the technique disclosed herein, the ratio (W2/W1) is preferably 1.2 or less, more preferably 1.1 or less. The distance W1 is, for example, the distance from a center point M of the base of the target negative electrode tab 24t to a center point N₁ of the base of the positive electrode tab 22t which is closer thereto. The distance W2 is, for example, the distance from the center point M to a center point N₂ of the base of the other positive electrode tab 22t. The center point M is, for example, the center point between one end point I and the other end point J at the base of the negative electrode tab 24t. The "base of the negative electrode tab 24t" refers to, for example, a boundary portion between the negative electrode tab 24t and a negative electrode main body (not shown).

As shown in FIG. 6, the plurality of positive electrode tabs 22t are bundled on the first flat outer surface 2a side with respect to the first plane F1, and the tip side of the bundled portion is bent to face the second flat outer surface 2b. In this embodiment, the plurality of positive electrode tabs 22t are joined to the second current collecting portion 52 of the positive electrode current collecting member 50 on the distal end side of the bundled portion. Further, as shown in FIG. 6, the plurality of negative electrode tabs 24t are bundled on the first flat outer surface 2a side with respect to the first plane F 1, and the tip side of the bundled portion is bent to face the second flat outer surface 2b. In this embodiment, the plurality of negative electrode tabs 24t are joined to the second current collecting portion 62 of the negative electrode current collecting member 60 on the distal end side of the bundled portion.

That is, in the embodiment shown in FIGS. 6 and 7, the plurality of positive electrode tabs 22t are mainly provided in the first region R, and the plurality of negative electrode tabs 24t are mainly provided in the second region S. By dividing the wound electrode body 20 into a region (first region R) provided with the plurality of positive electrode tabs 22t and a region (second region S) provided with the plurality of negative electrode tabs 24t, for example, a variation in the distance between the closest positive electrode tab 22t and negative electrode tab 24t is suppressed. For this reason, in this embodiment, the capacity of the secondary battery 1 can be increased, and the current density distribution in the wound electrode body 20 can be prevented from becoming uneven.

Although not particularly limited, the tips of the positive electrode tabs 22t may be arranged on the second flat outer surface 2b side with respect to the first plane F1. As a result, a sufficient joining margin can be ensured for the positive electrode tab 22t, and more stable joining can be achieved. Further, as shown in FIG. 6, at least part of the region in which the negative electrode tabs 24t are bundled may be arranged on the first flat outer surface 2a side with respect to the first plane F1, and the tips of the negative electrode tabs 24t may be arranged on the second flat outer surface 2b side with respect to the first plane F1. As a result, a sufficient joining margin can be ensured for the negative electrode tabs 24t, and more stable joining can be achieved.

As shown in FIGS. 5 and 6, the shortest distance H1 between the first end portion 201 of the main body 20a and the positive electrode current collecting member 50 in the winding axis direction is shorter than the shortest distance H2 between the second end portion 202 and the negative electrode current collecting member 60. For example, when the length of the positive electrode tab 22t in the protrusion direction is shorter than the length of the negative electrode tab 24t in the same direction, the size of the wound electrode body 20 can be increased, which in turn can increase the capacity of the secondary battery 1, by setting a small foil collecting space of the positive electrode tabs 22t.

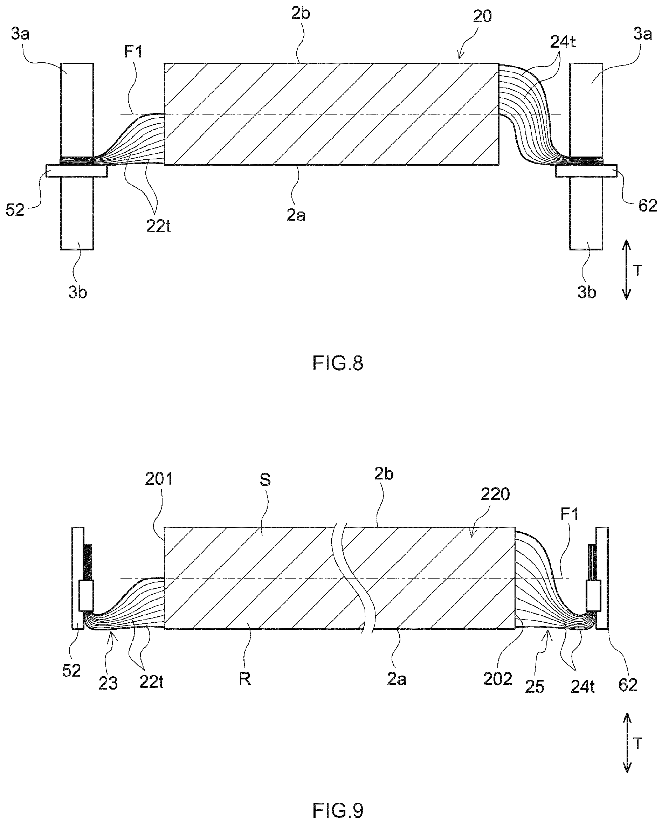

FIG. 8 is a schematic drawing explaining the connection between the electrode tabs and the electrode current collecting member. As shown in FIG. 8, after manufacturing the wound electrode body 20, the wound electrode body 20 is connected to the positive electrode current collecting member 50 and the negative electrode current collecting member 60. In such connection, for example, first, a foil collecting jig (not shown) is used to bundle the plurality of positive electrode tabs 22t on the side of the first flat outer surface 2a. Next, the plurality of bundled positive electrode tabs 22t and the second current collecting portion 52 of the positive electrode current collecting member 50 are superimposed. Next, the plurality of positive electrode tabs 22t and the second current collecting portion 52 that have been superimposed are sandwiched between a joining probe 3a and a joining probe 3b in the superposition direction and are joined (connected) by applying energy. The joining (connection) is performed in the same manner on the negative electrode side. Such joining can be realized by conventionally known means such as ultrasonic joining, laser welding, resistance welding, and the like.

Considering the bending of the electrode tabs, which will be described hereinbelow, the joining is preferably performed in a state where the contact surface of the plurality of bundled positive electrode tabs 22t with the second current collecting portion 52 is arranged substantially on the same plane with the contact surface of the bundled plurality of negative electrode tabs 24t with the second current collecting portion 62. Further, it is more preferable that joining be performed in a state where such two contact surfaces and the first flat outer surface 2a of the wound electrode body 20 are arranged substantially on the same plane. By taking this point into consideration, it is possible to design in advance the length of the electrode tabs that ensures good productivity and prevents the length of the electrode tabs from being excessive or insufficient.

After the bundled plurality of positive electrode tabs 22t have been joined together as described above, the plurality of positive electrode tabs 22t are bent so that the surface of the second current collecting portion 52 of the positive electrode current collecting member 50 to which the positive electrode tabs 22t are joined and the first end portion 201 of the wound electrode body 20 face each other. Further, after the bundled plurality of negative electrode tabs 24t have been joined together as described above, the plurality of negative electrode tabs 24t are bent so that the surface of the second current collecting portion 62 of the negative electrode current collecting member 60 to which the negative electrode tabs 24t are joined and the second end portion 202 of the wound electrode body 20 face each other.

The secondary battery 1 can be used for various purposes, and can be suitably used, for example, as a power source (driving power source) for a motor mounted on a vehicle such as a passenger car, a truck, and the like. Although the kind of vehicle is not particularly limited, examples thereof include a plug-in hybrid vehicle (PHEV), a hybrid vehicle (HEV), an electric vehicle (BEV), and the like.

As described above, the technique disclosed herein provides the secondary battery 1 that has the flat wound electrode body 20 in which the positive electrode 22 and the negative electrode 24 are laminated and wound with the separator 26 interposed therebetween. The secondary battery 1 has the positive electrode current collecting member 50 connected to the positive electrode 22. The wound electrode body 20 has the plurality of positive electrode tabs 22t connected to the positive electrode 22 at the first end portion 201 in the winding axis direction. Ten or more positive electrode tabs 22t are provided. The plurality of positive electrode tabs 22t are stacked. In the thickness direction T of the wound electrode body 20, the ratio (N_{1A}/N_{1B}) of the number N_{1A} of stacked layers of the positive electrode tabs 22t and the number N_{1B} stacked of layers of the positive electrode 22 satisfies 0.3 to 0.7. The plurality of positive electrode tabs 22t are bent and connected to the positive electrode current collecting member 50.

In other words, in the secondary battery 1, by setting the number of stacked layers of the positive electrode tabs 22t in the wound electrode body 20 to 10 or more, and setting the ratio of the number of stacked layers of the positive electrode tabs 22t to the number of stacked layers of the positive electrode 22 to 0.3 to 0.7, it is possible to reduce the size of the current collecting portion in the vicinity of the positive electrode tabs 22t while maintaining a sufficient output. Space saving in the vicinity of the connecting portion between the positive electrode tab group 23 and the positive electrode current collecting member 50 can be realized. Therefore, the size of the wound electrode body 20 can be increased, which in turn can increase the capacity of the secondary battery 1.

Further, where a plane passing through the winding axis WL of the wound electrode body 20 and perpendicular to the thickness direction T of the wound electrode body 20 is defined as the first plane F1, the first plane F1 and the positive electrode current collecting member 50 intersect. As a result of bending the plurality of positive electrode tabs 22t, the first plane F1 and the positive electrode current collecting member 50 intersect. Therefore, it is possible to save space in the vicinity of the connecting portion between the positive electrode tab group 23 and the positive electrode current collecting member 50, which in turn makes it possible to increase further the capacity of the secondary battery 1.

In this embodiment, the first electrode is the positive electrode 22, and the second electrode is the negative electrode 24. That is, the first electrode tab is the positive electrode tab 22t, and the second electrode tab is the negative electrode tab 24t. For example, a metal (aluminum, aluminum alloy, stainless steel, and the like) forming the positive electrode tab 22t has a higher resistance than a metal (copper, copper alloy, and the like) forming the negative electrode tab 24t. Therefore, for example, by making the positive electrode tab 22t shorter than the negative electrode tab 24t, the internal resistance of the secondary battery 1 can be reduced.

The first electrode may be the negative electrode 24 and the second electrode may be the positive electrode 22. That is, the first electrode tab may be the negative electrode tab 24t, and the second electrode tab may be the positive electrode tab 22t. For example, the positive electrode tab 22t may be made of a metal having a lower yield strength than the negative electrode tab 24t. Therefore, when the wound electrode body 20 moves inside the battery case 10 due to vibration, impact or the like, the positive electrode tab 22t is considered to have a higher risk of repeatedly buckling and stretching and subsequently breaking. Therefore, for example, by making the positive electrode tab 22t shorter than the negative electrode tab 24t, the risk of breaking the electrode tab can be reduced.

Specific examples of the technique disclosed herein have been described in detail above, but these are merely examples and do not limit the scope of the claims. The technique described in the claims includes various modifications and changes of the specific examples illustrated above. Other embodiments of the technology disclosed herein will be described hereinbelow. In the following embodiments, the aforementioned other matters are the same as those explained in the first embodiment, so that the overlapping description thereof is herein omitted.

### Second Embodiment

In the first embodiment, the plurality of positive electrode tabs 22t were mainly provided in the first region R of the wound electrode body 20, and the plurality of negative electrode tabs 24t were mainly provided in the second region S. However, this configuration is not limiting. FIG. 9 is a cross-sectional view of the wound electrode body in the second embodiment. In FIG. 9, in the wound electrode body 220, the first flat outer surface 2a side in the thickness direction T, with the first plane F1 as a reference, is the first region R, and the second flat outer surface 2b side is the second region S.

As shown in FIG. 9, in the first region R, the ratio A (N_{R1A}/N_{R1B}) of the number of stacked layers N_{R1A} of the positive electrode tabs 22t to the number N_{R1B} of stacked layers of the positive electrode 22 is 0.8 or more. The ratio A (N_{R1A}/N_{R1B}) is preferably 0.9 or more, and the closer it is to 1.0, the better. In the same region, the ratio B (N_{R2A}/N_{R2B}) of the number of stacked layers N_{R2A} of the negative electrode tabs 24t to the number N_{R2B} of stacked layers of the negative electrode 24 is 0.8 or more. The ratio B (N_{R2A}/N_{R2B}) is preferably 0.9 or more, and the closer it is to 1.0, the better.

Further, as shown in FIG. 9, in the second region S, the ratio C (N_{S1A}/N_{S1B}) of the number of stacked layers N_{S1A} of the positive electrode tabs 22t to the number N_{S1B} of stacked layers of the positive electrode 22 is 0.2 or less. The ratio C (N_{S1A}/N_{S1B}) is preferably 0.1 or less, and the closer it is to 0, the better. Further, in the same region, the ratio D (N_{S2A}/N_{S2B}) of the number of layers N_{S2A} of the negative electrode tabs 24t to the number N_{S2B} of layers of the negative electrode 24 is 0.8 or more. The ratio D (N_{S2A}/N_{S2B}) is preferably 0.9 or more, and the closer it is to 1.0, the better.

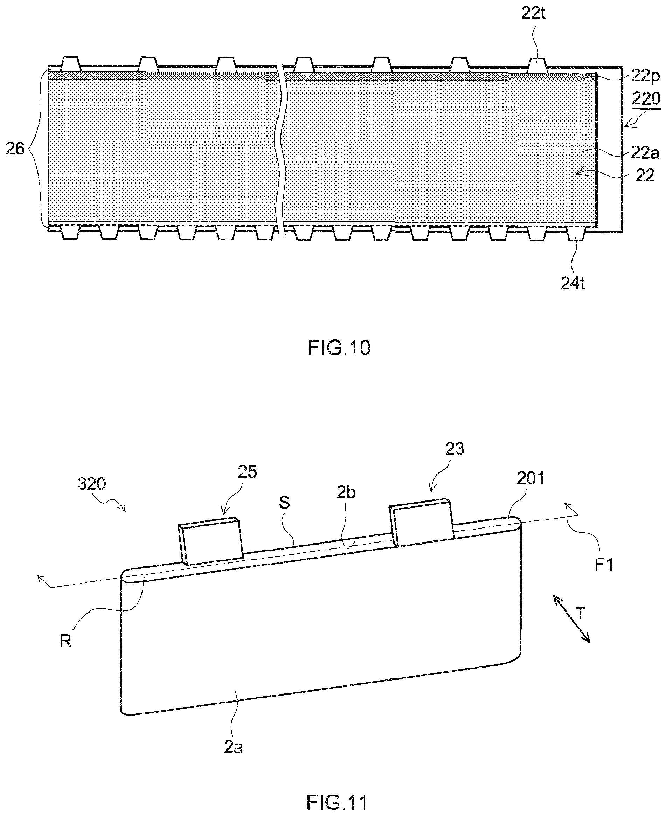

FIG. 10 is a plan view explaining the arrangement of electrode tabs in the second embodiment. As shown in FIG. 10, when the positive electrode 22 and the negative electrode 24 are superimposed with the separator 26 interposed therebetween, in the lateral direction of the electrodes, some of the plurality of negative electrode tabs 24t overlap with the positive electrode tabs 22t, and the other negative electrode tabs 24t do not overlap with the positive electrode tabs 22t. Where the positive electrode 22, the negative electrode 24, and the separator 26 are superimposed and wound with the electrode tabs arranged in this way, the configuration of the wound electrode body 220 shown in FIG. 9 can be realized.

In this embodiment, the plurality of positive electrode tabs 22t are mainly provided in the first region R of the wound electrode body 220, and the plurality of negative electrode tabs 24t are provided in both the first region R and the second region S. In this embodiment, the number of positive electrode tabs 22t is less than the number of negative electrode tabs 24t. By using the wound electrode body 220 having such a configuration, the size of the structure in the vicinity of the joint portion between the positive electrode tab group 23 and the positive electrode current collecting member 50 can be reduced, which in turn can increase the capacity of the secondary battery 1. Further, in addition to this effect, it is possible to suppress the uneven distribution of the current density in the wound electrode body 220.

### Third Embodiment

In the first embodiment and the second embodiment, the first end portion 201 of the wound electrode bodies 20 and 220 is provided with the plurality of positive electrode tabs 22t, and the second end portion 202 is provided with the plurality of negative electrode tabs 24t. However, this configuration is not limiting. FIG. 11 is a perspective view of the wound electrode body in the third embodiment. As shown in FIG. 11, in a wound electrode body 320, the first end portion 201 is provided with the plurality of positive electrode tabs 22t and the plurality of negative electrode tabs 24t. In this embodiment, the plurality of positive electrode tabs 22t are provided in the first region R on the side of the first flat outer surface 2a, and the plurality of negative electrode tabs 24t are provided in the second region S on the side of the second flat outer surface 2b. When adopting the wound electrode body 320 of this embodiment as the wound electrode body, the positive electrode current collecting member 50 and the negative electrode current collecting member 60 can be provided on the inner surface of the sealing plate 14. The effects of the technique disclosed herein can be also realized when the wound electrode body 320 is used. Also in this embodiment, as in the second embodiment, a configuration can be adopted in which the plurality of positive electrode tabs 22t are mainly provided in the first region R of the wound electrode body 320, and the plurality of negative electrode tabs 24t are provided in both the first region R and the second region S.

### Other Embodiments

In the above embodiments, the tips of the electrode tabs joined to the electrode current collecting member face the same direction (for example, toward the second flat outer surface 2b) for both electrodes. However, this configuration is not limiting. For example, the tips of the positive electrode tabs 22t may be placed so as to be on the side of the second flat outer surface 2b, and the tips of the negative electrode tabs 24t may be placed so as to be on the side of the first flat outer surface 2a.

## Claims

1. A secondary battery (1) comprising:
a flat wound electrode body (20, 220, 320) in which a first electrode (22) and a second electrode (24) different from the first electrode (22) are laminated and wound with a separator (26) interposed therebetween; and,
a first current collecting member (50) connected to the first electrode (22),
wherein
the wound electrode body (20, 220, 320) comprises a plurality of first electrode tabs (22t) connected to the first electrode (22) at a first end portion (201) in a winding axis (WL) direction,
ten or more first electrode tabs (22t) are provided,
the plurality of first electrode tabs (22t) are stacked,
in a thickness direction (T) of the wound electrode body (20, 220, 320), a ratio (N_{1A}/N_{1B}) of the number N_{1A} of stacked layers of the first electrode tabs (22t) and the number N_{1B} of stacked layers of the first electrode (22) satisfies 0.3 to 0.7, and
the plurality of first electrode tabs (22t) are bent and connected to the first electrode current collecting member (50).

2. The secondary battery (1) according to claim 1,
wherein
a plane, passing through the winding axis (WL) of the wound electrode body (20, 220, 320), and perpendicular to the thickness direction (T) of the wound electrode body (20, 220, 320), is defined as a first plane (F1), and
the first plane (F1) and the first electrode current collecting member (50) intersect.

3. The secondary battery (1) according to claim 1 or 2, comprising a battery case (10) that accommodates the wound electrode body (20, 220, 320) therein,
wherein
the battery case (10) comprises
an exterior body (12) having a bottom portion (12a), an opening (12h), a pair of first side walls (12b), and a pair of second side walls (12c), and
a sealing plate (14) that seals the opening (12h).

4. The secondary battery (1) according to any one of claims 1 to 3,
wherein
the wound electrode body (20, 320) has a first flat outer surface (2a) and a second flat outer surface (2b) at both ends in the thickness direction (T) of the wound electrode body (20, 320),
the wound electrode body (20, 320) comprises a plurality of second electrode tabs (24t) connected to the second electrode (24) at the first end portion (201), or at a second end portion (202) different from the first end portion (201) in the winding axis (WL) direction, and the plurality of second electrode tabs (24t) are stacked,
a plane, passing through the winding axis (WL) of the wound electrode body (20, 320), and perpendicular to the thickness direction (T) of the wound electrode body (20, 320), is defined as a first plane (F1),
in the wound electrode body (20, 320), a region on the first flat outer surface (2a) side with respect to the first plane (F1) is defined as a first region (R), and a region on the second flat outer surface (2b) side with respect to the first plane (F1) is defined as a second region (S),
in the first region (R), a ratio A of the number of stacked layers of the first electrode tabs (22t) to the number of stacked layers of the first electrode (22) is 0.8 or more, and a ratio B of the number of stacked layers of the second electrode tabs (24t) to the number of stacked layers of the second electrode (24) is 0.2 or less,
in the second region (S), a ratio C of the number of stacked layers of the first electrode tabs (22t) to the number of stacked layers of the first electrode (22) is 0.2 or less and, a ratio D of the number of stacked layers of the second electrode tabs (24t) to the number of stacked layers of the second electrode (24) is 0.8 or more,
the plurality of first electrode tabs (22t) are bundled on the side of the first flat outer surface (2a), and
the plurality of second electrode tabs (24t) are bundled on the side of the first flat outer surface (2a).

5. The secondary battery (1) according to claim 4,
wherein
the plurality of first electrode tabs (22t) are bent such that a distal end side of a bundled portion faces the second flat outer surface (2b), and
the plurality of second electrode tabs (24t) are bent such that a distal end side of a bundled portion faces the second flat outer surface (2b).

6. The secondary battery (1) according to any one of claims 1 to 3,
wherein
the wound electrode body (220, 320) has a first flat outer surface (2a) and a second flat outer surface (2b) at both ends in the thickness direction (T) of the wound electrode body (220, 320),
the wound electrode body (220, 320) comprises a plurality of second electrode tabs (24t) connected to the second electrode (24) at the first end portion (201), or at a second end portion (202) different from the first end portion (201) in the winding axis (WL) direction, and the plurality of second electrode tabs (24t) are stacked,
a plane, passing through the winding axis (WL) of the wound electrode body (220, 320), and perpendicular to the thickness direction (T) of the wound electrode body (220, 320), is defined as a first plane (F1),
in the wound electrode body (220, 320), a region on the first flat outer surface (2a) side with respect to the first plane (F1) is defined as a first region (R), and a region on the second flat outer surface (2b) side with respect to the first plane (F 1) is defined as a second region (S),
in the first region (R), a ratio A of the number of stacked layers of the first electrode tabs (22t) to the number of stacked layers of the first electrode (22) is 0.8 or more, and a ratio B of the number of stacked layers of the second electrode tabs (24t) to the number of stacked layers of the second electrode (24) is 0.8 or more,
in the second region (S), a ratio C of the number of stacked layers of the first electrode tabs (22t) to the number of stacked layers of the first electrode (22) is 0.2 or less, and a ratio D of the number of stacked layers of the second electrode tabs (24t) to the number of stacked layers of the second electrode (24) is 0.8 or more,
the plurality of first electrode tabs (22t) are bundled on the side of the first flat outer surface (2a), and
the plurality of second electrode tabs (24t) are bundled on the side of the first flat outer surface (2a).

7. The secondary battery (1) according to claim 6,
wherein
the plurality of first electrode tabs (22t) are bent such that a distal end side of a bundled portion faces the second flat outer surface (2b), and
the plurality of second electrode tabs (24t) are bent such that a distal end side of a bundled portion faces the second flat outer surface (2b).
